# EUROPEAN PATENT SPECIFICATION

(11) **EP 4 075 384 B1**
(45) Date of publication and mention of the grant of the patent: **13.08.2025**
(21) Application number: 21168656.3
(22) Date of filing: 15.04.2021
(51) Int. Cl.: G06T 7/80

(54) **METHODS AND SYSTEMS FOR DETERMINING PRE-DETERMINED POINTS IN AN INPUT IMAGE**
VERFAHREN UND SYSTEME ZUR BESTIMMUNG VORBESTIMMTER PUNKTE IN EINEM EINGANGSBILD
PROCÉDÉS ET SYSTÈMES POUR DÉTERMINER DES POINTS PRÉDÉTERMINÉS DANS UNE IMAGE D'ENTRÉE

(43) Date of publication of application: 19.10.2022
(73) Proprietor: Aptiv Technologies AG, 8200 Schaffhausen (CH)
(72) Inventor: LELOWICZ, Kamil, 44-295 Bogunice (PL); NOWAK, Mariusz, 40-145 Katowice (PL)
(74) Representative: Manitz Finsterwald Patent- und Rechtsanwaltspartnerschaft mbB

(56) References cited:
- CN-A- 111 105 466
- CN-A- 111 640 157
- YANG JIACHEN ET AL: "Precise Measurement of Position and Attitude Based on Convolutional Neural Network and Visual Correspondence Relationship", IEEE TRANSACTIONS ON NEURAL NETWORKS AND LEARNING SYSTEMS, IEEE, PISCATAWAY, NJ, USA, vol. 31, no. 6, 1 June 2020 (2020-06-01), pages 2030 - 2041, XP011791105, ISSN: 2162-237X, [retrieved on 20200601], DOI: 10.1109/TNNLS.2019.2927719

## Description

### FIELD

The present disclosure relates to methods and systems for determining pre-determined points in an input image.

### BACKGROUND

Digital imaging devices, such as digital cameras, are used in automotive applications for a variety of tasks. However, it may be required to properly calibrate the digital imaging device.

Accordingly, there is a need to provide efficient and reliable methods for camera calibration.

J. Yang, J. Man, M. Xi, X. Gao, W. Lu and Q. Meng, "Precise Measurement of Position and Attitude Based on Convolutional Neural Network and Visual Correspondence Relationship," in IEEE Transactions on Neural Networks and Learning Systems, vol. 31, no. 6, pp. 2030-2041, June 2020, doi: 10.1109/TNNLS.2019.2927719, discloses an object pose measurement scheme based on convolutional neural network and an end-to-end position and attitude detection.

CN 111 640 157 A discloses a checkerboard corner detection method based on a neural network and application of the checkerboard corner detection method. The method comprises the following steps: acquiring a multi-angle image of a checkerboard to be detected, and preprocessing the multi-angle image to obtain a grayscale image; based on a neural network, carrying out angular point detection on the gray level image so as to determine candidate angular points; removing the candidate angular points which do not meet the geometric standard of the checkerboard to determine the angular points to be detected; determining sub-pixel positions of the checkerboard corner points to be detected according to the obtained corner points to be detected; and performing region screening on the obtained to-be-detected corner points, determining an index matrix of each to-be-detected corner point, and further obtaining a plurality of checkerboard corner point sequences which are not crossed with one another, thereby finishing corner point detection of the to-be-detected checkerboard.

CN 111 105 466 A discloses a calibration method of a camera in a CT system. The method comprises the following steps: acquiring an image of a CT sickbed in a moving process through the camera with a fixed position and a fixed visual angle; establishing a camera coordinate system, selecting one or more angular points of a sickbed as reference points, and detecting coordinates of the reference points from all the acquired images through an angular point detection method; selecting an image of which the reference point is closest to the center of the camera during acquisition as a standard image, taking the coordinate of the reference point in the standard image as a standard coordinate, and calculating the standard coordinate of the reference point on other images except the standard image in a camera visual angle coordinate system according to the moving square and the moving distance of the sickbed; finally, solving a correction coefficient matrix capable of mapping the reference point coordinates of each image to the corresponding standard coordinates; and correcting the to-be-corrected image newly acquired by the camera through the correction coefficient matrix.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining pre-determined points in an input image, the method comprising the following steps performed (in other words: carried out) by computer hardware components: applying a plurality of shifts to the input image to obtain a plurality of shifted images; detecting pre-determined points in each of the shifted images; re-shifting the detected pre-determined points; and determining the pre-determined points based on the re-shifted detected pre-determined points.

In other words, detection may be carried out on shifted images, and the detections may be shifted back (or re-shifted) to the original coordinates, so that the pre-determined points are determined based on the re-shifted detections.

One of the shifts may be zero, so that the one shifted image may be original image.

Detecting the pre-determined points comprises determining coordinates (of the pre-determined points in the shifted images).

The re-shifting comprises shifting the coordinates to a coordinate system of the input image.

Detecting the pre-determined points comprises determining probabilities (of a pre-determined point being present at the respective determined coordinates).

Determining the pre-determined points based on the re-shifted detected pre-determined points comprises accumulating the probabilities of the re-shifted detected pre-determined points.

According to an embodiment, the input image is divided into a plurality of cells. Each cell may be a rectangular subportion of the input image. All cells may have identical size, or they may have different sizes. The cells may be overlapping or non-overlapping.

According to an embodiment, the shifted images are shifted by at least one of at least substantially 1% of a size of the cell, or by at least one of at least substantially 2% of the size of the cell, or by at least one of at least substantially 5% of the size of the cell, or by at least one of at least substantially 10% of the size of the cell.

For example, the cell size may be 8x8 (in other words: 8 pixels wide, 8 pixels high). The shifts may be an input parameter to the method. The shift may be an integer number (positive or negative) and the absolute value of the shift may be less than the cell size. The method may be executed in parallel, so that several shifts may be set at the same time; for example, the shifts may be selected from a list consisting of: [-6, -4, -2, 0, 2, 4, 6], and the outcome from all the shifts may be merged and utilized at this same time.

The shift may be carried out in two components, for example vertically and horizontally. For example, the length of the vertical shift may be identical to the length of the horizontal shift (so that a diagonal shift may be provided).

The image comprises (in other words: shows; in other words: includes) a checkerboard.

The pre-determined points comprise saddle points of the checkerboard.

According to an embodiment, saddle points are crossings of black-white borders of the checkerboard.

According to an embodiment, the pre-determined points in each of the shifted images are determined using a machine learning method.

The machine learning method comprises an artificial neural network.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

According to an embodiment, the computer system further comprises a camera configured to acquire the image.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

With the methods and devices as described herein, a technique of using machine learning to identify saddle points in camera calibration patterns may be provided.

### DRAWINGS

Exemplary embodiments and functions of the present disclosure are described herein in conjunction with the following drawings, showing schematically:
- Fig. 1A: an illustration of an example of input data;
- Fig. 1B: an illustration of a further example of input data;
- Fig. 2: an illustration of saddle point examples;
- Fig. 3A: an illustration of input data shifting according to various embodiments;
- Fig. 3B: an illustration of the alignment according to various embodiments; and
- Fig. 4: a flow diagram illustrating a method for determining pre-determined points in an input image according to various embodiments.

### DETAILED DESCRIPTION

According to various embodiments, a non maximum suppression method for saddle points detectors may be provided.

Saddle points on a picture (or image) may be one of the most characteristic features that can be extracted from the picture.

Saddle points may be widely used for intrinsic calibration of a camera, for extrinsic calibration of camera, and/ or for matching characteristic points.

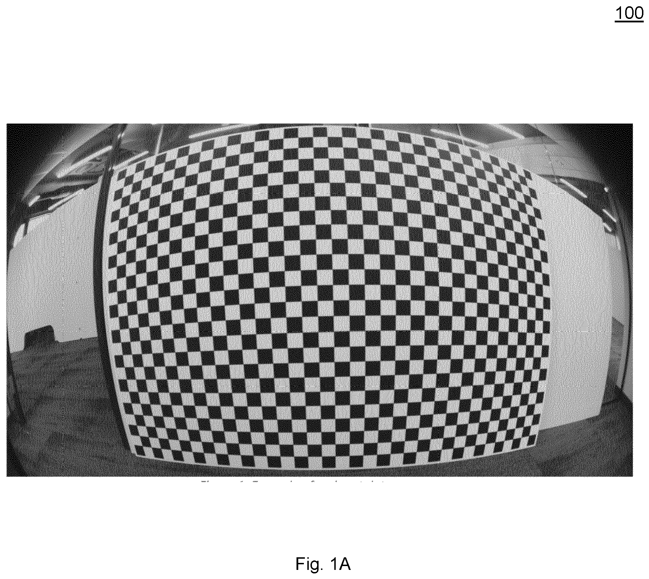

Fig. 1A shows an illustration 100 of an example of input data, i.e. an input image. It can be seen how big distortion appears in the picture. The image shows a checkerboard.

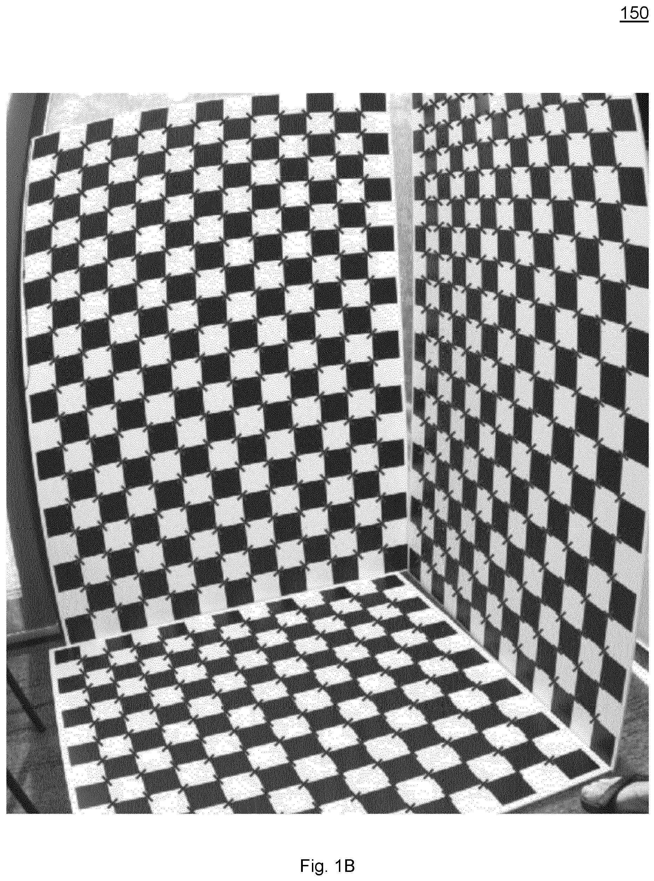

Fig. 1B shows an illustration 150 of a further example of input data. It can be seen that checkerboards may be provided in more than one plane.

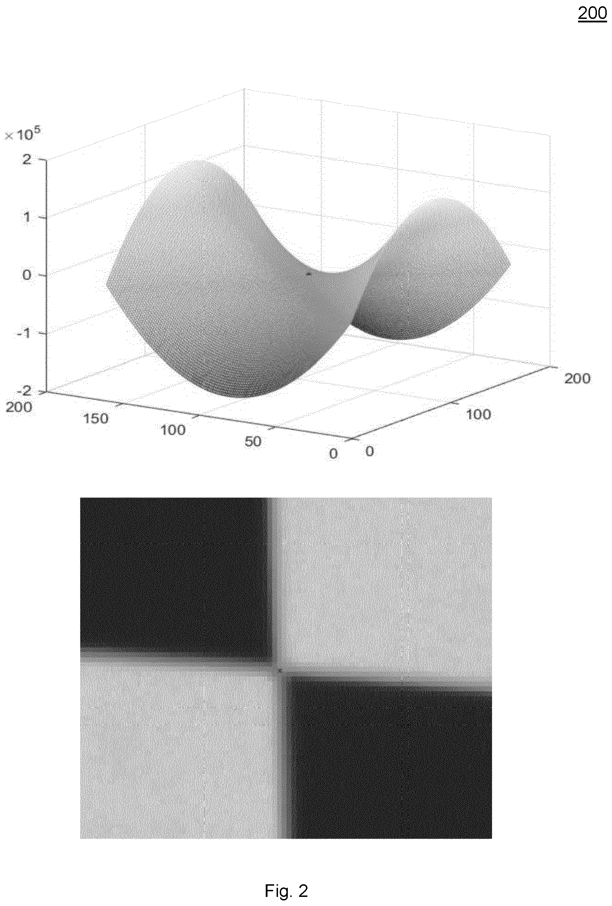

Fig. 2 shows an illustration 200 of saddle point examples. In the top portion of Fig. 2, the pixel values are shown over the pixel coordinates. The bottom portion shows the image, and the saddle point is at the crossing between the borders between dark areas and light areas.

The accuracy of finding saddle points may have critical impact on the quality of camera calibration. It may moreover be desired to detect all the saddle points, since not detecting a saddle point may lead to serious problems in the later stages of the calibration procedure (related to problems with matching the saddle points and their predicted location).

In a method relying on fixed size regions of interest to detect and locate saddle points, problems may arise when a saddle point is located on the border between two or more regions of interest. Such a location of a saddle point frequently leads to a situation in which the particular saddle point is associated with neither of the regions of interest and consequently is not detected. According to various embodiments, the recall of the saddle points located on the borders between regions of interest may be increased.

According to various embodiments, a method of non-maximum suppression may be provided which may increase recall of saddle points by a neural network. A non-maximum suppression (NMS) method may ensure that not more than one pixel (or one location, which may be of sub-pixel resolution) is identified as a maximum, even in an image it may appear that a plurality of pixels take a maximum value.

A standard NMS method may require matching "all with all", which may lead to a O(n²) time complexity, wherein n is the width (or the height) of the image. In contrast thereto, according to various embodiments, by leveraging the grid structure, an O(n) time complexity may be achieved.

According to various embodiments, use vectorization techniques (SIMD (Single instruction, multiple data) instructions) may be used to gain even more speed. In addition, the calculation on grid structure with independent cells may be easily ported to a GPU (graphics processing unit). This may mean that while the main method (which may be referred to as core) may be running on the GPU, the NMS may also be executed on the GPU without sending data back to the CPU (central processing unit). Exchanging data between CPU and GPU may be time consuming. According to various embodiments, the transmission volume between the CPU and the GPU may be minimized.

When a saddle point appears very close to the edge or corner of the cell it is frequently not detected. According to various embodiments, this problem may be overcome by passing the image through the neural network several times. Each time of passing the image through the neural network, the frame may be positioned differently so that the upper left corner of the photo (or image) is shifted from its original position.

This method may cause the saddle points that were close to the border of the cells to be moved away from the border. However, this approach may require the use of the non-maximum suppressive method (NMS), as most saddle points may be repeatedly detected. However, NMS methods are computationally time-consuming.

According to various embodiments, this problem may be overcome by using the grid structure to leverage the speed of the method execution. Outputs from different runs, which are with different offsets to each other, may be aligned so that they return values in one reference system. Consequently, for each cell, the final location of the saddle point position in the cell may be independently calculated in parallel using a weighted average, where the weight is determined by the probability of the point's existence.

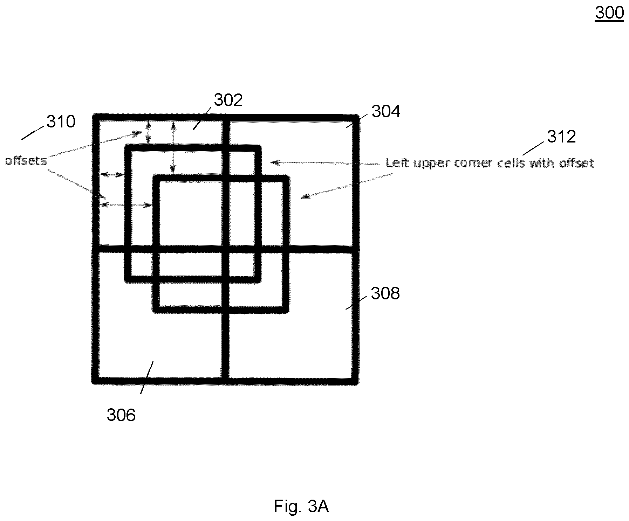

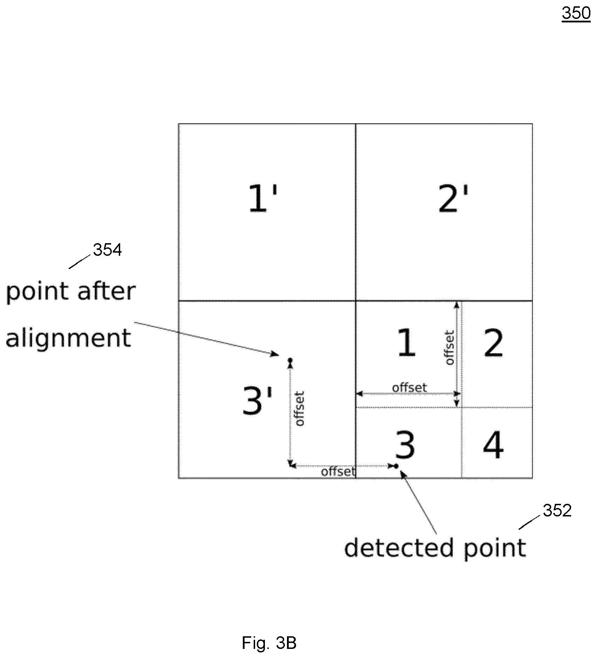

Fig. 3 shows an illustration 300 of input data shifting according to various embodiments. An input image may for example be divided into a plurality of cells, for example four cells 302, 304, 306, 308. For example, the first cell 302 may be the left upper corner cell. Detection of saddle points may be carried out for a plurality of shifted images (or shifted cells). For example, for the first cell 302, shifts 310 may be applied, so as to generate a plurality of shifted cells 312 corresponding to the first cell 302.

Fig. 3B shows an illustration 350 of the alignment according to various embodiments. The alignment process will be illustrated by examining how a saddle point is moved during the alignment.

Let the (detected) saddle point 352 be located in the lower-right cell (the one divided in the subregions denoted 1,2,3 and 4). Let the shift be equal to the offset shown in Fig. 3B.

The saddle point lies in one of the four subregions, and the point 354 after alignment may be in the same region or in a different region:
If the point is inside region 1, then after alignment it may be moved to cell 1'. The position in cell 1' after alignment may be calculated based on the given offset (but in opposite directions). The same may apply to the subregions 2 and 3. For subregion 4, the detected point may still be in the same cell (the lower-right cell), and only the position may be affected by the offset.

In highly distorted regions of an image, the saddle points may be stretched, so that their sizes may be bigger than the cell size. In such case, when the center of the saddle point is far from the center of the cell, it may be difficult for the saddle point detector to produce a correct output. While commonly used methods may miss saddle points, the method according to various embodiments may properly detect all saddle points.

The method according to various embodiments may be fast and may improve recall from 98% to 99.9% (with a decreased the number of missed saddle points over 20 times).

Ground truth (GT) data may be created in a semi-automatic way. The results obtained from a "standard detector" may be manually corrected. False positive detections may be removed and missing detections may be added. A problem may be that it may be hard to judge where exactly a saddle point is located.

Creating a ground truth, a saddle point position may only be estimated within +-1px accuracy. The prediction may be treated as a true positive (TP) when it is less than two pixels from the GT. In this case, recall may be defined as: #TP/(#all GT on image). It will be understood that the # symbol stands for "number of".

As described above, it may be hard to evaluate "location error" of predictions. The locations of saddle points may be used in camera intrinsic calibration. Thus, two sets of detected saddle points on the same image may be compared by checking how well the camera was calibrated (in other words, for which set of saddle points the residual of the camera calibration (model optimization) is smaller).

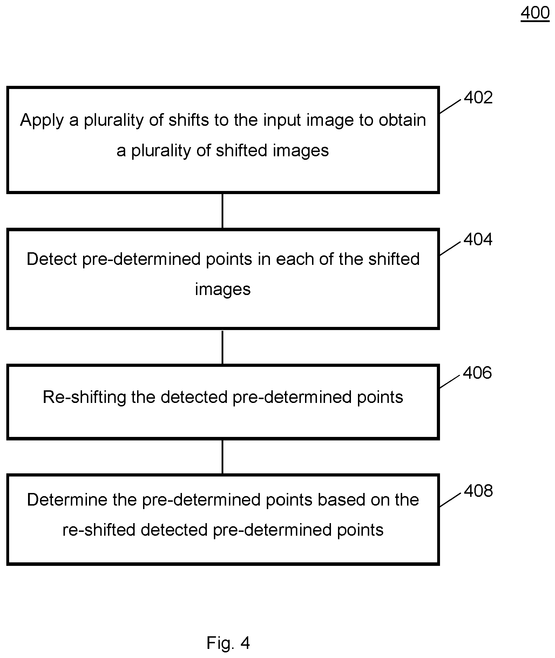

Fig. 4 shows a flow diagram 400 illustrating a method for determining pre-determined points in an input image according to various embodiments. At 402, a plurality of shifts may be applied to the input image to obtain a plurality of shifted images. At 404, pre-determined points may be detected in each of the shifted images. At 406, the detected pre-determined points may be re-shifted. At 408, the pre-determined points may be determined based on the re-shifted detected pre-determined points.

Detecting the pre-determined points includes determining coordinates.

The re-shifting includes shifting the coordinates to a coordinate system of the input image.

Detecting the pre-determined includes determining probabilities.

Determining the pre-determined points based on the re-shifted detected pre-determined points includes accumulating the probabilities of the re-shifted detected pre-determined points. According to various embodiments, the input image may be divided into a plurality of cells.

According to various embodiments, the shifted images may be shifted by at least one of at least substantially 1% of a size of the cell, or by at least one of at least substantially 2% of the size of the cell, or by at least one of at least substantially 5% of the size of the cell, or by at least one of at least substantially 10% of the size of the cell.

The image includes or shows a checkerboard.

The pre-determined points may include or may be saddle points of the checkerboard.

According to various embodiments, saddle points may be crossings of black-white borders of the checkerboard.

According to various embodiments, the pre-determined points in each of the shifted images may be determined using a machine learning method.

According to various embodiments, the machine learning method may include or may be an artificial neural network.

Each of the steps 402, 404, 406, 408 and the further steps described above may be performed by computer hardware components.

### Reference numeral list

- 100: illustration of an example of input data
- 150: illustration of a further example of input data

- 200: illustration of saddle point examples

- 300: illustration of input data shifting according to various embodiments
- 302: cell
- 304: cell
- 306: cell
- 308: cell
- 310: shifts
- 312: plurality of shifted cells

- 350: illustration of the alignment according to various embodiments
- 352: detected point
- 354: point after alignment

- 400: flow diagram illustrating a method for determining pre-determined points in an input image according to various embodiments
- 402: step of applying a plurality of shifts to the input image to obtain a plurality of shifted images
- 404: step of detecting pre-determined points in each of the shifted images
- 406: step of re-shifting the detected pre-determined points
- 408: step of determining the pre-determined points based on the re-shifted detected pre-determined points

## Claims

1. A computer implemented method for determining pre-determined points in an input image,
the method comprising the following steps carried out by computer hardware components:
- applying (402) a plurality of shifts to the input image to obtain a plurality of shifted images;
- detecting (404) pre-determined points in each of the shifted images;
- re-shifting (406) the detected pre-determined points; and
- determining (408) the pre-determined points based on the re-shifted detected pre-determined points;
wherein detecting the pre-determined points comprises determining coordinates;
wherein the re-shifting comprises shifting the coordinates to a coordinate system of the input image;
wherein detecting the pre-determined points comprises determining probabilities of a pre-determined point being present at the respective determined coordinates;
wherein determining the pre-determined points based on the re-shifted detected pre-determined points comprises accumulating the probabilities of the re-shifted detected pre-determined points;
wherein the image comprises a checkerboard;
wherein the pre-determined points comprise saddle points of the checkerboard; and
wherein the pre-determined points in each of the shifted images are determined using a machine learning method.

2. The computer implemented method of claim 1,
wherein the input image is divided into a plurality of cells.

3. The computer implemented method of at least one of claims 1 to 2, wherein the shifted images are shifted by at least one of at least substantially 1% of a size of the cell, or by at least one of at least substantially 2% of the size of the cell, or by at least one of at least substantially 5% of the size of the cell, or by at least one of at least substantially 10% of the size of the cell.

4. The computer implemented method of at least one of claims 1 to 3, wherein saddle points are crossings of black-white borders of the checkerboard.

5. The computer implemented method of at least one of claims 1 to 4, wherein the machine learning method comprises an artificial neural network.

6. A computer system, the computer system comprising a plurality of computer hardware components configured to carry out steps of the computer implemented method of at least one of claims 1 to 5.

7. The computer system of claim 6, further comprising:
a camera configured to acquire the image.

8. A non-transitory computer readable medium comprising instructions which, when executed by a computer, cause the computer to carry out at least one of claims 1 to 5.

## Patentansprüche

1. Computerimplementiertes Verfahren zum Bestimmen vorbestimmter Punkte in einem Eingangsbild,
wobei das Verfahren die folgenden Schritte umfasst, die von Computerhardwarekomponenten ausgeführt werden:
- Anwenden (402) einer Vielzahl von Verschiebungen auf das Eingangsbild, um eine Vielzahl von verschobenen Bildern zu erhalten;
- Detektieren (404) vorbestimmter Punkte in jedem der verschobenen Bilder;
- Neuverschieben (406) der detektierten vorbestimmten Punkte; und
- Bestimmen (408) der vorbestimmten Punkte basierend auf den neuverschobenen detektierten vorbestimmten Punkten;
wobei das Detektieren der vorbestimmten Punkte das Bestimmen von Koordinaten umfasst;
wobei das Neuverschieben das Verschieben der Koordinaten zu einem Koordinatensystem des Eingangsbilds umfasst;
wobei das Detektieren der vorbestimmten Punkte das Bestimmen von Wahrscheinlichkeiten umfasst, dass ein vorbestimmter Punkt an den jeweiligen bestimmten Koordinaten vorhanden ist;
wobei das Bestimmen der vorbestimmten Punkte basierend auf den neuverschobenen detektierten vorbestimmten Punkten das Akkumulieren der Wahrscheinlichkeiten der neuverschobenen detektierten vorbestimmten Punkte umfasst;
wobei das Bild ein Schachbrett umfasst;
wobei die vorbestimmten Punkte Sattelpunkte des Schachbretts umfassen; und
wobei die vorbestimmten Punkte in jedem der verschobenen Bilder unter Verwendung eines maschinellen Lernverfahrens bestimmt werden.

2. Computerimplementiertes Verfahren nach Anspruch 1, wobei das Eingangsbild in eine Vielzahl von Zellen unterteilt ist.

3. Computerimplementiertes Verfahren nach mindestens einem der Ansprüche 1 bis 2, wobei die verschobenen Bilder um mindestens eines von mindestens im Wesentlichen 1 % einer Größe der Zelle oder um mindestens eines von mindestens im Wesentlichen 2 % der Größe der Zelle oder um mindestens eines von mindestens im Wesentlichen 5 % der Größe der Zelle oder um mindestens eines von mindestens im Wesentlichen 10 % der Größe der Zelle verschoben sind.

4. Computerimplementiertes Verfahren nach mindestens einem der Ansprüche 1 bis 3, wobei Sattelpunkte Kreuzungen von Schwarz-Weiß-Grenzen des Schachbretts sind.

5. Computerimplementiertes Verfahren nach mindestens einem der Ansprüche 1 bis 4, wobei das maschinelle Lernverfahren ein künstliches neuronales Netz umfasst.

6. Computersystem, wobei das Computersystem eine Vielzahl von Computerhardwarekomponenten umfasst, die konfiguriert sind, um Schritte des computerimplementierten Verfahrens nach mindestens einem der Ansprüche 1 bis 5 auszuführen.

7. Computersystem nach Anspruch 6, ferner umfassend:
eine Kamera, die konfiguriert ist, um das Bild zu erfassen.

8. Nichtflüchtiges computerlesbares Medium, das Anweisungen umfasst, die, wenn sie von einem Computer ausgeführt werden, den Computer veranlassen, mindestens einen der Ansprüche 1 bis 5 auszuführen.

## Revendications

1. Procédé mis en œuvre par ordinateur pour déterminer des points prédéterminés dans une image d'entrée,
le procédé comprenant les étapes suivantes exécutées par des composants matériels informatiques, consistant à :
- appliquer (402) une pluralité de décalages à l'image d'entrée afin d'obtenir une pluralité d'images décalées ;
- détecter (404) des points prédéterminés dans chacune des images décalées ;
- redécaler (406) les points prédéterminés détectés ; et
- déterminer (408) les points prédéterminés sur la base des points prédéterminés détectés redécalés ;
dans lequel détecter les points prédéterminés comprend le fait de déterminer des coordonnées ;
dans lequel redécaler comprend le fait de décaler les coordonnées vers un système de coordonnées de l'image d'entrée ;
dans lequel détecter les points prédéterminés comprend le fait de déterminer les probabilités qu'un point prédéterminé soit présent aux coordonnées déterminées respectives ;
dans lequel déterminer les points prédéterminés sur la base des points prédéterminés détectés redécalés comprend le fait de d'accumuler les probabilités des points prédéterminés détectés redécalés ;
dans lequel l'image comprend un damier ;
dans lequel les points prédéterminés comprennent des points selle du damier ; et
dans lequel les points prédéterminés dans chacune des images décalées sont déterminés à l'aide d'un procédé d'apprentissage automatique.

2. Procédé mis en œuvre par ordinateur selon la revendication 1,
dans lequel l'image d'entrée est divisée en une pluralité de cellules.

3. Procédé mis en œuvre par ordinateur selon au moins l'une des revendications 1 à 2,
dans lequel les images décalées sont décalées d'au moins l'un d'au moins sensiblement 1 % de la taille de la cellule, ou d'au moins l'un d'au moins sensiblement 2 % de la taille de la cellule, ou d'au moins l'un d'au moins sensiblement 5 % de la taille de la cellule, ou d'au moins l'un d'au moins sensiblement 10 % de la taille de la cellule.

4. Procédé mis en œuvre par ordinateur selon au moins l'une des revendications 1 à 3,
dans lequel les points selle sont des croisements de bordures noir-blanc du damier.

5. Procédé mis en œuvre par ordinateur selon au moins l'une des revendications 1 à 4,
dans lequel le procédé d'apprentissage automatique comprend un réseau neuronal artificiel.

6. Système informatique, le système informatique comprenant une pluralité de composants matériels informatiques configurés pour exécuter les étapes du procédé mis en œuvre par ordinateur selon au moins l'une des revendications 1 à 5.

7. Système informatique selon la revendication 6, comprenant en outre :
une caméra configurée pour acquérir l'image.

8. Support non transitoire lisible par ordinateur comprenant des instructions qui, lorsqu'elles sont exécutées par un ordinateur, amènent l'ordinateur à mettre en œuvre au moins l'une des revendications 1 à 5.
